# EUROPEAN PATENT APPLICATION

(11) **EP 4 597 794 A1**
(43) Date of publication of application: **06.08.2025**
(21) Application number: 24154607.6
(22) Date of filing: 30.01.2024
(51) Int. Cl.: H02J 13/00

(54) **METHOD FOR CONTOLLING A TRANSFORMER SUBSTATION BY A CONTROL DEVICE ARRANGED REMOTE FROM THE TRANSFORMER, SYSTEM, COMPUTER PROGRAM PRODUCT AND COMPUTER-READABLE STORAGE MEDIUM**

(71) Applicant: Hitachi Energy Ltd, 8050 Zürich (CH)
(72) Inventor: BURCH, Philipp Erich, 5630 Muri (CH)
(74) Representative: Epping - Hermann - Fischer

(57) **Abstract**

A method for controlling a transformer substation (6) within a first grid (2) by a control device (4) of a converter (5) connected to the first grid (2) and a second grid (3) is provided, wherein the converter (5) is arranged remote from the transformer substation (6), the method comprising:
- providing measurement information (y), to the control device (4), being characteristic of at least one measured electrical property at a location of the transformer substation (6),
- determining an estimation information (ym), by the control device (4), being characteristic of at least one estimated electrical property at the location of the transformer substation (6) based on a model (m) comprising the first grid (2) and the converter (5),
- determining an estimated delay time (yp) of the estimation information (ym), by the control device (4), being characteristic of a delay time dependent on a distance between the location of the transformer substation (6) and the converter (5),
- determining a correction information, by the control device (4), dependent on the measurement information (y), the estimation information (ym) and the estimated delay time for controlling the transformer substation (6).

## Description

The present disclosure relates to a method for controlling a transformer substation within a first grid by a control device of a converter connected to the first grid and a second grid, wherein the converter is arranged remote from the transformer, a system, a computer program product, and a computer-readable storage medium.

A typical remote converter is used to connect two power grids to transfer energy. Generally, the typical remote converter is also used to remote control a catenary transformer substation and to protect the catenary transformer from an overcurrent.

Such a typical remote or local power control is not ideal due to a condition of the grid and signal delay from the remote location.

Embodiments of the disclosure relate to a method improving remote controlling. A further embodiment relates to a system configured to perform such a method, as well as a computer program product and a computer-readable storage medium.

This is achieved by the subject-matter of the independent claims. Further embodiments are evident from the dependent claims and the following description.

A method for controlling a transformer substation within a first grid by a control device of a converter connected to the first grid and a second grid, wherein the converter is arranged remote from the transformer, is described.

The transformer substation is in particular arranged within the first grid. The first grid has, for example, a first power input, to which the transformer substation is connected. Furthermore, the first grid has, for example, a first power output, which is configured to provide power to a load. Exemplarily, the transformer substation is a passive device.

For example, the transformer substation is arranged between the first power input and the first power output. Exemplarily, the transformer substation comprises at least one transformer. The transformer substation is particularly configured to step up and/or to step down a voltage. If a voltage at the first power input is higher than a voltage to be provided to the first power output, the transformer substation is configured to step down the voltage of the first power input to the voltage of the first power output. If a voltage at the first power input is lower than a voltage to be provided to the first power output, the transformer substation is configured to step up the voltage of the first power input to the voltage of the first power output.

The load exemplarily is a train. Preferably, in railway applications, the transformer substation is configured to step down a high voltage from the first power input to a lower voltage suitable for a catenary wire, for example.

The converter comprises, for example, a plurality of power semiconductor switches, such as insulated gate bipolar transistors or IGBTs. Exemplarily, the converter is a modular multilevel converter, MMC. The MMC comprises, for example, a plurality of individual power electronic modules arranged in a stack. Each power electronic module comprises, exemplarily, one or a plurality of semiconductor switches, and capacitors, and/or other passive electrical components.

The first grid has, for example, a second power input, to which the converter is connected. Exemplarily, the converter is connected between the second grid and the further first power input of the first grid. In particular, the converter is configured to connect the first grid and the second grid.

Exemplarily, the first grid and the second grid are equal to or different from one another with respect to their operating frequency. The converter is exemplarily configured to step up or step down the operating frequency of the second grid to the operating frequency of the first grid. Additionally, the converter is in particular configured to step up or step down an operating voltage of the second grid to a voltage of the first grid. If the transformer substation provides less voltage to the first power output, the converter is configured to provide further power to the power output. This means that the converter is configured, for example, to provide power to the first power output, which is configured to provide power to the load.

Preferably, in railway applications, the converter is configured to step down a high operating frequency from the second grid to a low operating frequency of the first grid, for example. Additionally, in railway applications, the converter is configured to step down a high voltage from the second grid to a low voltage of the first power output of the first grid, for example.

Particularly, the converter is arranged spaced apart from the transformer substation. Exemplarily, a distance between the converter and the transformer substation is at least 500 m or at least 1 km.

Additionally, the converter comprises a control device. Exemplarily, the control device is configured to control an output of the converter, in particular dependent on a control input. In particular, the control device is configured to control the converter in order to provide a predeterminable amount of power to the first power output. Exemplarily, the converter is configured to dynamically provide power to the first power output dependent on the control input. Additionally, an active power and a reactive power can be controlled by the control device dependent on the control input.

According to an embodiment of the method, measurement information is provided to the control device, being characteristic of at least one measured electrical property at a location of the transformer substation. In particular, the measured electrical property comprises at least one of an active power and a reactive power, a current, a voltage, a frequency. The measured electrical properties comprise, for example, a real delay time. The real delay time occurs as the converter is arranged remote from the transformer substation. The real delay time is characteristic, for example, of a delay of the actual measurement at the location of the transformer substation and the delayed provision at the control device.

Exemplarily, the measured electrical properties are measured directly at the transformer substation, in particular the transformer, and/or close to the transformer substation at a side of the first grid facing the first power output.

According to the embodiment, an estimation information is determined by the control device, being characteristic of at least one estimated electrical property at the location of the transformer substation based on a model comprising the first grid and the converter. The model is, for example, a mathematical model comprising electronic elements of the converter and the first grid, such as power lines and electrical components. In particular, a first model of the converter and a second model of the first grid are provided and merged to form the model.

Exemplarily, a control input is provided from the control device to the converter for providing power to the first grid. The control input is, for example, determined by the control device dependent on a power to be provided to the first power output and/or a condition of the first grid.

Initially, a power to be provided to the first power output is provided, e.g. being a predeterminable value. Subsequently, an error control value is determined, being characteristic of a difference between the power to be provided to the first power output and an actual power provided from the transformer substation, being characteristic of the measurement information. Subsequently, the control device determines a control input dependent on the error control value, which is in particular provided to the converter for providing a rest of the power to be provided to the first power output.

In particular, the estimated electrical property comprises at least one of an active power and a reactive power, a current, a voltage, a frequency. The estimated electrical property is, for example, determined dependent on the control input and the model. In particular, the estimated electrical property is determined dependent on an immediate dynamic response of the model in relation to the control input.

Exemplarily, the estimated electrical property is determined, inter alia, using a Kalman filter and/or a lookup table.

According to the embodiment, an estimated delay time of the estimation information is determined by the control device, being characteristic of a delay time dependent on a distance between the location of the transformer substation and the converter. In particular, the delay time is determined dependent on the model.

According to the embodiment, a correction information is determined by the control device, dependent on the measurement information, the estimation information and the estimated delay time for controlling the transformer substation.

Exemplarily, to account for modelling errors, the measurement information comprising the real delay time is compared to the estimated delay time. Based on the comparison, an estimation error is determined, for example. Subsequently, the estimation error is in particular added to the estimation information, for corrected estimation information characteristic of the correction information. In particular, the correction information is determined dependent on the corrected estimation information, wherein the correction information is used to correct the error control value.

The method described herein is in particular a computer-implemented method.

Advantageously, to tackle difficulties arising due to possible conditions of the first grid and a signal delay from the remote location, a prediction-based approach is beneficial, as described herein above. The use of the measurement information and the estimation information enables the converter to control the power flowing through the remote transformer substation while guaranteeing stable grid conditions, e.g. a stable voltage, locally, which might be disturbed by the reaction of the converter due to signal delays or weak grid conditions in the remote location. By determining the estimation information, the estimated actual state, e.g. a voltage and a current, of the remote first grid location are provided before the measurement information is acquired and/or transferred to the control device. Therefore, a more agile and robust control of a system with poor signal quality, e.g. regarding a delay and a resolution, can be advantageously achieved.

In particular, the use of the estimation information as well as the estimated delay time allows to bypass the restrictions resulting from a poor signal quality, e.g. from the measurement information provided from the transformer substation to the converter. Thus, the controller device performance and/or a responsiveness are advantageously increased in a save way.

According to a further embodiment, the correction information comprises an estimation error.

According to a further embodiment, the measurement information is compared to the estimation information with the estimated delay time to determine the estimation error. In particular, the measurement information comprises the real delay time, which is compared to the estimated delay time. The estimation error is determined dependent on the comparison.

According to a further embodiment, the estimation error is added to the estimation information to generate the correction information. In particular, the correction information is characteristic of a corrected estimation information being corrected by the estimation error resulting from the comparison of the real delay time and the estimated delay time.

Exemplarily, the error control value is corrected dependent on the correction information and the power to be provided to the first power output, in particular the predeterminable value.

According to a further embodiment, the estimation information is characteristic of an immediate dynamic response subsequent to a control input, from the control device to the converter. In particular, the converter injects a power to the first grid dependent on the control input.

According to a further embodiment, the control device is configured to control an active power and a reactive power of the transformer substation. In particular, the control device is configured to control the active power and the reactive power of the transformer substation dependent on the control input, e.g. dependent on the power injected to the first grid, and in particular dependent on the correction information.

According to a further embodiment, at least one lookup table of a usage of the first grid is included in the model. Exemplarily, in railway applications, the lookup table can comprise a net schedule. The net schedule is characteristic of a time when trains have to be provided with power by the first power output and/or an amount of power.

This advantageously increases the determination of the correction information.

According to a further embodiment, the transformer substation and the converter are both connected to a first power output configured to provide power to a load. Exemplarily, in railway applications, the transformer substation and the converter are both connected to the catenary wire, which is configured to provide power to the load being exemplarily a train.

According to a further embodiment, the first grid is configured to be operated with a first frequency and the second grid is configured to be operated with a second frequency, and the first frequency is different from the second frequency. The first frequency and the second frequency are in particular characteristic of the operating frequencies described herein above.

Exemplarily, the first grid is a 16.7 Hz power grid, and the second grid is a 50 Hz power grid.

A further embodiment relates to a control device for controlling a transformer substation within a first grid by a control device of a converter connected to the first grid and a second grid, in particular, configured to perform the method described herein above. Therefore, the features as described in connection with the control device are also applicable to the method and vice versa.

A further embodiment relates to a system for controlling a transformer substation within a first grid by a control device of a converter connected to the first grid and a second grid, particularly comprising the control device. Therefore, the features as described in connection with the system are also applicable to the control device and vice versa.

According to an embodiment, the system comprises a transformer substation, and the system comprises a control device of the converter as described herein before.

According to the embodiment of the system, the transformer substation is arranged within a first grid, and the converter is connected to the first grid and a second grid .

Exemplarily, the transformer substation and the converter are connected to the catenary wire.

According to a further embodiment of the system, the control device is configured to remote control an active power and a reactive power of the transformer substation.

According to a further embodiment of the system, a power at a first power output to which the control device and the transformer substation are connected is dependent on the power provided by the transformer substation and the converter.

Exemplarily, a power at the catenary wire is dependent on the power provided by the transformer substation and the converter.

A further embodiment relates to a computer program comprising instructions which, when the computer program is executed by a computing device, cause the computer program to execute the method described herein above. In particular, the computer program can be implemented as hardware control, software control and/or firmware control or combinations thereof.

A further embodiment relates to a computer-readable storage medium on which the computer program product described herein above is stored.

The accompanying Figures are included to provide a further understanding. In the Figures, elements of the same structure and/or functionality may be referenced by the same reference signs. It is to be understood that the embodiments shown in the Figures are illustrative representations and are not necessarily drawn to scale.
Figure 1 schematically shows a system according to an exemplary embodiment.
Figures 2 and 3 each schematically show a flow diagram of the method according to an exemplary embodiment.

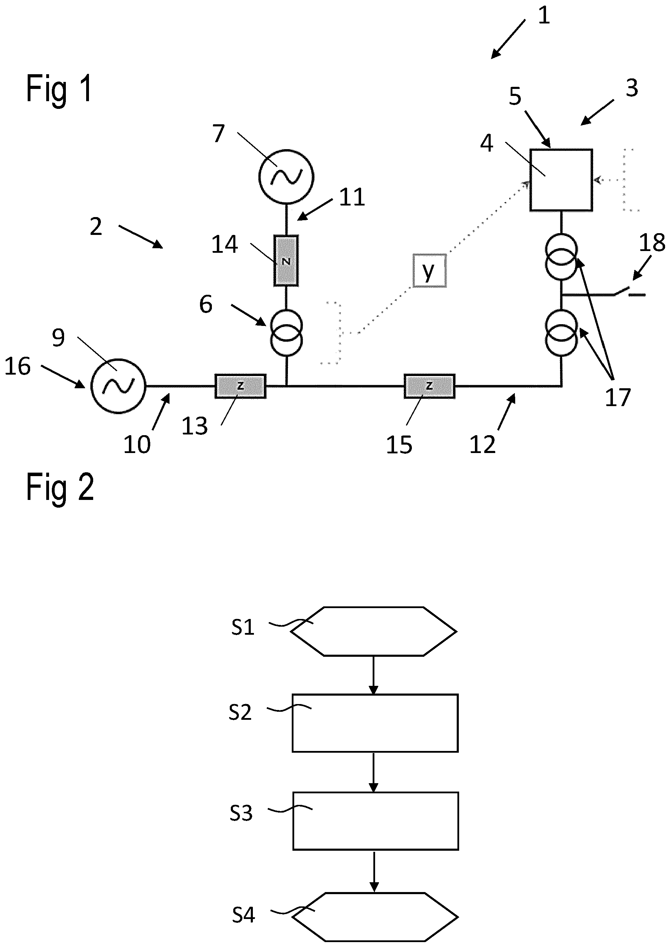

The system 1 according to the exemplary embodiment of Figure 1 comprises a transformer substation 6 and a converter 5 with a control device 4 configured to remote control the transformer substation 6. The system 1 further comprises a first grid.

The first grid 2 has a first power input 7 connected to the transformer substation 6 and a first power output 9 connected to the transformer substation 6. In particular, the transformer substation 6 is arranged between the first power input 7 and the first power output 9. In particular, the first power output 9 is characteristic of a catenary wire for providing power to a load 16, e.g. a train.

A voltage of the first grid 2 at the first power input 7 is, for example, 123 kV. A voltage to be provided to the first power output 9 is, for example, 15 kV. The transformer substation 6 particularly comprises at least one transformer configured to step down the voltage at the first power input 7 to the voltage to be provided to the first power output 9.

A first power line 10 of the first grid 2 between the first power output 9 and the transformer substation 6 is characteristic of a first impedance 13. A second power line 11 of the first grid 2 between the first power input 7 and the transformer substation 6 is characteristic of a second impedance 14. An impedance, particularly such as the first and second impedances 13, 14, is characteristic of a complex quantity that represents an opposition that a circuit presents to a flow of an alternating current. In particular, the impedance comprises a resistance and a reactance, which is related to effects of a capacitance and an inductance in the circuit.

The converter 5 is arranged remote from the transformer substation 6; in particular the converter 5 is spaced apart from the transformer substation 6 at a distance of at least 1 km. The converter 5 is arranged between the first grid 2 and the second grid 3. The first grid 2 has a second power input 8, to which the converter 5 is connected. The converter 5 is connected to the first power output 9 via the second power input 8.

A third power line 12 of the first grid 2 between the first power output 9 and the converter 5 is characteristic of a third impedance 15. Exemplarily, further transformers 17 are arranged between the first power output 9 and the converter 5 at the third power line 12. Additionally, it is possible that an additional power input is connectable via a switch 18 to the third power line 12.

The first grid 2 is configured to be operated with a first frequency and the second grid 3 is configured to be operated with a second frequency. Exemplarily, the converter 5 is configured to change the second frequency to the first frequency. The converter 5 particularly is further configured to step down the voltage of the second grid 3 to the voltage to be provided to the first power output 9.

Measurement information y can be acquired at the transformer substation 6. This measurement information y can be provided to the control device 4. The measurement information y can be provided to the control device 4 in particular with a real delay time.

Exemplarily, the converter 5 and/or the transformer substation 6 is/are configured to be controlled by the control device 4 regularly, e.g. at least once every millisecond. A time resolution of the measurement information y is at least 10 ms or at least 100 ms, in particular at least 10 times or at least 100 times as big as a control interval. The real delay time is, for example, at least 0.5 s and at most 5 s, e.g. 1 s.

In method stage S1 in Figure 2, measurement information y is provided to the control device 4, being characteristic of at least one measured electrical property at a location of the transformer substation 6.

In method stage S2, an estimation information ym is determined by the control device 4, being characteristic of at least one estimated electrical property at the location of the transformer substation 6 based on a model m comprising the first grid 2 and the converter 5.

In particular, method stages S1 and S2 can be performed simultaneously, and exemplarily regularly. A time interval of performing method stage S1 can be equal to or smaller than a time interval of performing method stage S2. Thus, advantageously, a time resolution can be increased.

Subsequently or simultaneously to method stage S2, an estimated delay time yp of the estimation information ym is determined in method stage S3 by the control device 4, being characteristic of a delay time dependent on a distance between the location of the transformer substation 6 and the converter 5.

In method stage S4, a correction information is determined by the control device 4, dependent on the measurement information y, the estimation information ym and the estimated delay time for controlling the transformer substation 6.

Thus, advantageously, a power provided to the load 16 can be kept particularly stable in a particularly save manner.

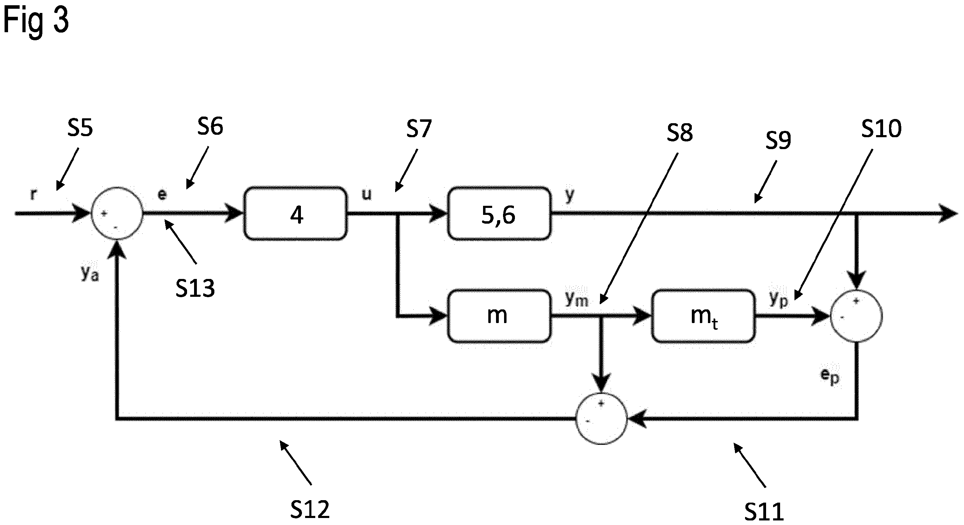

The method described in connection with Figure 2 is described in more detail, i.e. comprising several method sub-stages, in connection with Figure 3.

In method stage S5 according to Figure 3, a power to be provided to the first power output 9 is provided as a predeterminable value r. The predeterminable value r is particularly determined dependent on a power demand of the load 16.

Subsequently, in method stage S6, an error control value e is determined, being characteristic of a difference between an actual power provided to the first power output 9, characteristic of an initial measurement information y, and the power to be provided to the first power output 9, in particular from the transformer substation 6.

Subsequently, in method stage S7 the control device 4 determines a control input u dependent on the error control value e, which is in particular provided to the converter 5 for injecting a power for stabilizing the first grid, in particular to provide the rest of the power to be provided to the first power output 9.

In method stage S9, in response to the control input u, a measurement information y is provided, being characteristic of at least one measured electrical property at a location of the transformer substation 6. The measurement information particularly comprises a real delay time; in particular, the measurement information y at the control device 4 comprises the real delay time.

Additionally, in response to the control input u, an estimation information ym is determined in method stage S8, being characteristic of at least one estimated electrical property at the location of the transformer substation 6 based on a model m comprising the first grid 2 and the converter 5.

The estimated electrical property is determined dependent on an immediate dynamic response of the model m of the converter 5 and the first grid 2 in relation to the control input u.

Further, an estimated delay time of the estimation information ym is determined in method stage S10, being characteristic of a delay time dependent on a distance between the location of the transformer substation 6 and the converter 5.

In method stage S11, the measurement information y comprising the real delay time is compared to the estimated delay time and an estimation error ep is determined.

Subsequently, the estimation error is added to the estimation information ym in method stage S12, for determining a corrected estimation information ya.

In method stage S13, the correction information characteristic of the corrected estimation information ya is used to correct the error control value e and, exemplarily further proceeding with method stage S7, also the control input u is corrected based on the corrected error control value.

The embodiments and exemplary embodiments described herein above can be combined accordingly.

### Reference Signs

- 1: system
- 2: first grid
- 3: second grid
- 4: control device
- 5: converter
- 6: transformer substation
- 7: first power input
- 8: second power input
- 9: first power output
- 10: first power line
- 11: second power line
- 12: third power line
- 13: first impedance
- 14: second impedance
- 15: third impedance
- 16: load
- 17: further transformers
- 18: switch

- m: model
- r: predeterminable value
- e: error control value
- u: control input
- y: measurement information
- ym: estimation information
- yp: estimated delay time
- ep: estimation error
- ya: corrected estimation information

## Claims

1. Method for controlling a transformer substation (6) within a first grid (2) by a control device (4) of a converter (5) connected to the first grid (2) and a second grid (3), wherein the converter (5) is arranged remote from the transformer substation (6), the method comprising:
- providing measurement information (y), to the control device (4), being characteristic of at least one measured electrical property at a location of the transformer substation (6),
- determining an estimation information (ym), by the control device (4), being characteristic of at least one estimated electrical property at the location of the transformer substation (6) based on a model (m) comprising the first grid (2) and the converter (5),
- determining an estimated delay time (yp) of the estimation information (ym), by the control device (4), being characteristic of a delay time dependent on a distance between the location of the transformer substation (6) and the converter (5),
- determining a correction information, by the control device (4), dependent on the measurement information (y), the estimation information (ym) and the estimated delay time for controlling the transformer substation (6).

2. Method according to claim 1, wherein
- the correction information comprises an estimation error, and
- the measurement information (y) is compared to the estimation information (ym) with the estimated delay time to determine the estimation error.

3. Method according to claim 2, wherein
- the estimation error is added to the estimation information (ym) to generate the correction information.

4. Method according to one of claims 1 to 3, wherein
- the estimation information (ym) is characteristic of an immediate dynamic response subsequent to a control input (u), from the control device (4) to the converter (5).

5. Method according to one of claims 1 to 4, wherein
- the control device (4) is configured to control an active power and a reactive power of the transformer substation (6).

6. Method according to one of claims 1 to 5, wherein
- at least one lookup table of a usage of the first grid (2) is included in the model (m).

7. Method according to one of claims 1 to 6, wherein
- the transformer substation (6) and the converter (5) are both connected to a first power output (9) configured to provide power to a load (16).

8. Method according to one of claims 1 to 7, wherein
- the first grid (2) is configured to be operated with a first frequency and the second grid (3) is configured to be operated with a second frequency, and
- the first frequency is different from the second frequency.

9. Control device (4) being configured to perform the method according to one of claims 1 to 8.

10. System (1) comprising
- a transformer substation (6), and
- a control device (4) of a converter (5) according to claim 9, wherein
- the transformer substation (6) is arranged within a first grid, and
- the converter (5) is connected to the first grid (2) and a second grid (3).

11. System (1) according to claim 10, wherein
- the control device (4) is configured to remote control an active power and a reactive power of the transformer substation (6).

12. System (1) according to one of claims 10 or 11, wherein
- a power at a first power output (9) to which the control device (4) and the transformer substation (6) are connected is dependent on a power provided by the transformer substation (6) and the converter (5).

13. Computer program comprising instructions which, when the computer program is executed by a computing device, cause the computer program to execute the method according to one of claims 1 to 8.

14. Computer-readable storage medium, on which the computer program according to claim 13 is stored.
